(19) Europäisches Patentamt
European Patent Office
Office européen des brevets

(11) **EP 1 012 458 B1**

(12) **EUROPÄISCHE PATENTSCHRIFT**

(45) Veröffentlichungstag und Bekanntmachung des Hinweises auf die Patenterteilung:
**11.12.2002 Patentblatt 2002/50**

(21) Anmeldenummer: **97909287.1**

(22) Anmeldetag: **18.09.1997**

(51) Int Cl.$^7$: **F02B 27/02**

(86) Internationale Anmeldenummer:
**PCT/EP97/05117**

(87) Internationale Veröffentlichungsnummer:
**WO 98/015727 (16.04.1998 Gazette 1998/15)**

(54) **ANSAUGSYSTEM FÜR EINE BRENNKRAFTMASCHINE**

INTAKE SYSTEM FOR AN INTERNAL COMBUSTION ENGINE

SYSTEME D'ASPIRATION POUR MOTEUR A COMBUSTION INTERNE

(84) Benannte Vertragsstaaten:
**DE ES FR GB IT SE**

(30) Priorität: **10.10.1996 DE 19641715**

(43) Veröffentlichungstag der Anmeldung:
**28.06.2000 Patentblatt 2000/26**

(73) Patentinhaber: **FILTERWERK MANN & HUMMEL GMBH**
**71631 Ludwigsburg (DE)**

(72) Erfinder:
• **FÜSSER, Rolf**
**D-76332 Bad Herrenalb (DE)**

• **ESCH, Hans-Joachim**
**D-71296 Heimsheim (DE)**

(74) Vertreter: **Voth, Gerhard, Dipl.-Ing.**
**FILTERWERK MANN + HUMMEL GMBH**
**Postfach 4 09**
**71631 Ludwigsburg (DE)**

(56) Entgegenhaltungen:
**EP-A- 0 119 634          EP-A- 0 167 794**
**WO-A-93/23658          GB-A- 2 202 276**

• **PATENT ABSTRACTS OF JAPAN vol. 10, no. 360 (M-541), 3.Dezember 1986 & JP 61 155618 A (NISSAN MOTOR CO), 15.Juli 1986,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 012 458 B1

**Beschreibung**

Die Erfindung betrifft ein Ansaugsystem für eine Brennkraftmaschine nach dem Oberbegriff des Hauptanspruchs.

Aus der DE OS 42 16 255 ist ein Ansaugrohr für eine Brennkraftmaschine bekannt. Dieses Ansaugrohr besteht aus einer Anzahl von einzelnen Saugrohren, die eingangsseitig mit einem Sammelrohr verbunden sind. Das Ansaugrohr ist einstückig ausgebildet und in Blasformtechnik hergestellt. Zwischen zwei einzelnen Saugrohren ist ein Nebenschlußresonator vorgesehen. Dieser ist ein kurzes Rohrstück, das eine Auslöschung von Schallwellen einer bestimmten Frequenz bewirkt. Die Länge des Rohrstückes ist auf die Schallwellen abzustimmen und beträgt $\lambda/4$. Es besteht auch die Möglichkeit, diesen Nebenschlußresonator mit dem Reinluftraum des Luftfiltergehäuses zu verbinden. Bevorzugt wird jedoch eine möglichst schallquellennahe Anordnung. Der gezeigte Nebenschlußresonator ist wirksam bei einer bestimmten Frequenz, d. h. damit auch bei einer bestimmten Drehzahl der Brennkraftmaschine. Sollen nun bei verschiedenen Drehzahlbereichen der Brennkraftmaschine störende Schallwellen ausgeblendet werden, so wäre es denkbar, mehrere Nebenschlußresonatoren anzuordnen und diese auf die entsprechenden Frequenzen abzustimmen. Dies erfordert jedoch einen erheblichen Platzbedarf.

Aus der EP 119634 ist ein Resonator für eine Brennkraftmaschine, gemäß Anspruch 1, 1. Teil, bekannt, wobei unterhalb eines oder mehrerer akustischer Hälse eine Drehblende vorzusehen ist mit welcher die Resonanzkammer mit dem jeweiligen Hals in Verbindung gebracht werden kann. Diesem Stand der Technik läßt sich entnehmen, dass ein Hals, der sich an einer Hauptleitung anschließt beim Übergang in die Resonanzkammer durch entsprechende Verschlußmittel öffenbar oder verschließbar ist. Ein Nachteil dieser Einrichtung liegt darin, dass auch bei einem geschlossenen Hals dieser mit der Hauptleitung in Verbindung steht und dabei akustische Störungen auftreten, welche zu einer Verschlechterung des Ergebnisses insgesamt beitragen.

Es ist ferner aus der WO 93/23658 eine Luftansauganlage für eine Brennkraftmaschine bekannt, welche einen mittels Einzelsaugrohren an Brennräume angeschlossenen Saugverteiler aufweist in den über eine an einer ersten Öffnung angeschlossenen Ansaugleitung Frischluft einströmt. Zur Vermeidung von Drehmomenteinbrüchen in bestimmten Drehzahlbereichen wird in solchen Bereichen ein zusätzliches über eine Verbindungsleitung an den Saugverteiler angeschlossenes Volumen in Form eines als Helmholzresonator ausgebildeten nicht durchströmten Behälters zugeschaltet. Zur Anpassung an mehrere oder ausgeprägte Drehmomenteinbrüche kann das Volumen mittels Drehklappen variabel zugeschaltet werden. Die unterschiedlichen Volumina erfordern jedoch einen hohen Bauteileaufwand und einen großen Platzbedarf.

Der Erfindung liegt die Aufgabe zugrunde, die genannten Nachteile zu vermeiden und ein Ansaugsystem für eine Brennkraftmaschine zu schaffen, welches einen Nebenschlußresonator aufweist, der bei geringem Volumen oder geringem Platzbedarf über ein breites Frequenzspektrum wirksam ist.

Diese Aufgabe wird ausgehend vom Oberbegriff des Hauptanspruchs durch dessen kennzeichnenden Merkmale gelöst. Der wesentliche Vorteil der Erfindung besteht darin, daß die frequenzrelevanten Größen veränderlich gemacht werden und damit die Möglichkeit besteht, kontinuierlich oder diskontinuierlich eine Anpassung des Nebenschlußresonators an die Motordrehzahl vorzunehmen. Diese Anpassung erfolgt beispielsweise dadurch, dass sich ein erster Hals - ausgehend von der Hauptstromleitung - in den Volumenbereich des Nebenschlußresonators erstreckt und ein zweiter Hals, der ein Mehrfaches des Querschnittes des ersten Halses aufweist, ebenfalls mit der Hauptstromleitung und dem Volumen des Nebenschlußresonators verbunden ist. Durch geeignete Klappen können in verschiedenen Frequenzbereichen beide Halsverbindungen oder nur eine Halsverbindung geöffnet bzw. geschlossen werden.

Gemäß einer Ausgestaltung der Erfindung wird vorgeschlagen, auch das Resonatorvolumen veränderlich zu gestalten. Dies ist beispielsweise durch die Unterteilung eines großen Volumens in mehrere Teilvolumina und das Zu- und Abschalten dieser Teilvolumina veränderbar. Die Veränderung der Größe des Nebenschlußresonators kann in einfacher Weise in Abhängigkeit von der Drehzahl und/oder in Abhängigkeit von dem Lastzustand von der Brennkraftmaschine erfolgen. Hierzu sind geeignete Drehzahlsensoren bzw. Sensoren zur Messung des Unterdrucks im Ansaugrohr zur Bestimmung des Lastzustandes anwendbar.

Zur Erhöhung der Wirkung eines Nebenschlußresonators ist gemäß einer weiteren Ausgestaltung der Erfindung vorgeschlagen, die Hauptstromleitung zu segmentieren und insbesondere im niederfrequenten Bereich ein Segment, d. h. ein Teil der Hauptstromleitung abzuschalten.

Weiterbildungsgemäß wird vorgeschlagen, einen weiteren Hals mit einem engen Querschnitt, aber mit doppelter Länge, bezogen auf den ersten Hals, vorzusehen. Auch dieser kann mit einer Klappe ausgestattet sein und dient zur Löschung besonders tiefer Frequenzen im Bereich 50 Hz.

Diese und weitere Merkmale von bevorzugten Weiterbildungen der Erfindung gehen außer aus den Ansprüchen auch aus der Beschreibung und den Zeichnungen hervor.

Die Erfindung wird nachfolgend anhand von Ausführungsbeispielen näher erläutert. Es zeigen:

Figur 1        die Prinzipdarstellung eines Ansaugsystems

Figur 2 a-e      einen Nebenschlußresonator mit den für verschiedene Frequenzen vorgesehenen Schaltstellungen

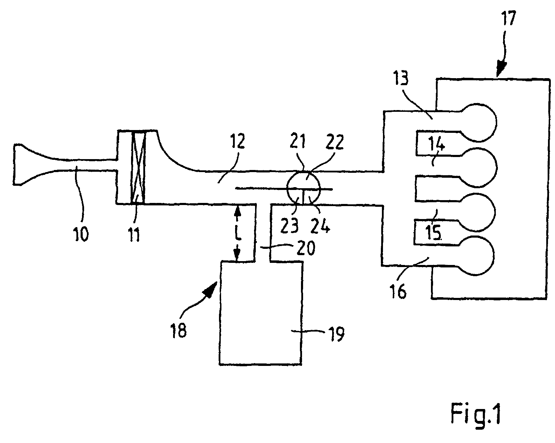

Ein Ansaugsystem gemäß Figur 1 besteht aus einem Lufteinlaß 10, einem nachgeschalteten Luftfilter 11, einer Hauptstromleitung 12 und - ausgehend von der Hauptstromleitung - Einzelleitungen 13, 14, 15, 16, die zu den Zylindern einer Brennkraftmaschine 17 führen. An der Hauptstromleitung ist ein Nebenschlußresonator 18 angekoppelt. Dieser besteht aus einem Resonatorvolumen 19 sowie einem Resonatorhals 20. Wie bereits erwähnt, wirken Nebenschlußresonatoren zuverlässig in dem Frequenzbereich, auf den sie eingestellt sind. Sie sind daher ein probates Mittel, störende Frequenzanteile gezielt zu bekämpfen. Dazu müssen sie den Bauabmessungen der Helmholtz-Resonatorformel gehorchen:

$$\text{Resonanzfrequenz } f_{res} = \text{Schallausbreitungsgeschwindigkeit} / 2Pi * \sqrt{}$$

Halsfläche/Halslänge/Volumen

Mit einem Volumen von beispielsweise 1.500 cm$^3$, einem Halsdurchmesser von 2 cm und einer Halslänge l von 18 cm stellt sich eine Resonatorfrequenz von 58 Hz ein. An die Hauptstromleitung 12 eines 4-Zylinder 4-Takt-Motors angeschlossen hat der Nebenschlußresonator 18 auf die zweite Ordnung der Motorfrequenz eine Löschwirkung bei n = 1.750 U/min. Die Wirkung ist umso besser, je größer das Verhältnis Halsquerschnittsfläche : Hauptstrom-/ Hauptleitungsquerschnittsfläche ist. Will man die Wirkung durch Vergrößerung der Halsquerschnittsfläche verbessern, muß zum Erhalt der $f_{res}$ entweder die Halslänge oder das Volumen bzw. beides vergrößert werden. Dies ist aus Baugründen oft nicht möglich. Man kann zur Verbesserung auch die Hauptleitung enger machen. Dies würde aber zu Problemen im Hochleistungsbereich des Motors führen.

Die Lösung bietet die Segmentierung der Haupt- oder Hauptstromleitung und ein Nebenschlußresonator mit Anpassungsschaltung. Der Hauptluftteil wird nur in dem Drehzahlbereich verengt, in dem der Nebenschlußresonator wirken soll. Da das Erfordernis zum Löschen von Tieftonanteilen nur im Niederdrehzahlbereich besteht, kann die Hauptleitung für den Betrieb in diesem Bereich ohne Schaden für das Motordrehmoment querschnittsgemindert werden. Dazu wird die Durchströmfläche der Hauptoder Hauptstromleitung 12, wie in der Querschnittsdarstellung 21, in drei Segmente eingeteilt, von denen zwei Segmente durch Klappen verschlossen werden können. So entstehen drei parallele Kanäle, bei denen die beiden unteren zum Anschluß des Nebenschlußresonators für Tieftonlöschung dienen. Die Klappe des oberen halbkreisförmigen Kanalteils 22 schließt sich, wenn die Drehzahl unter 3.000 U/min, sinkt, Die Klappe 23 des linken Kanalteils schließt sich, wenn die Drehzahl in den untersten Bereich eintritt. Klappen können auch dazu dienen, den Nebenschlußresonator auf eine drehzahlerforderliche Frequenz einzustellen. Durch ein System von Abzweigrohren und Klappen können verschiedene Resonanzfrequenzen eingestellt werden, die jeweils mit Erreichen der betreffenden Drehzahl wirksam werden.

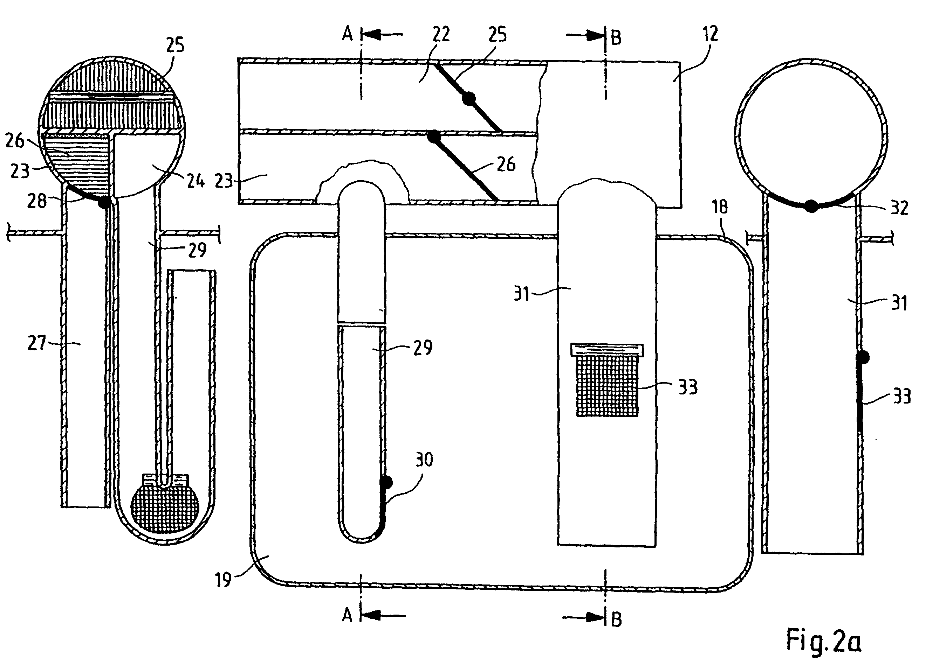

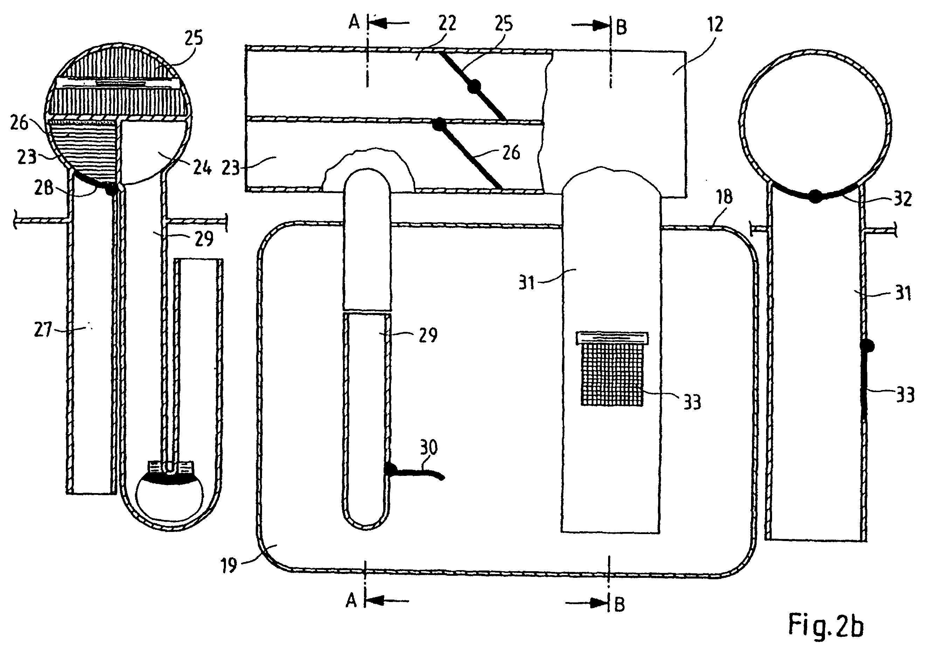

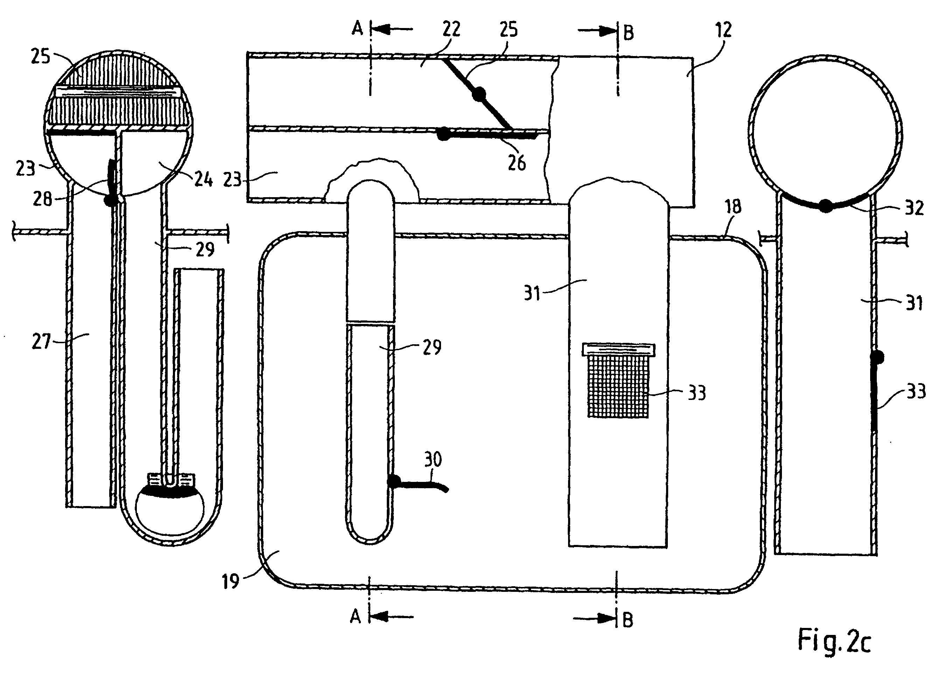

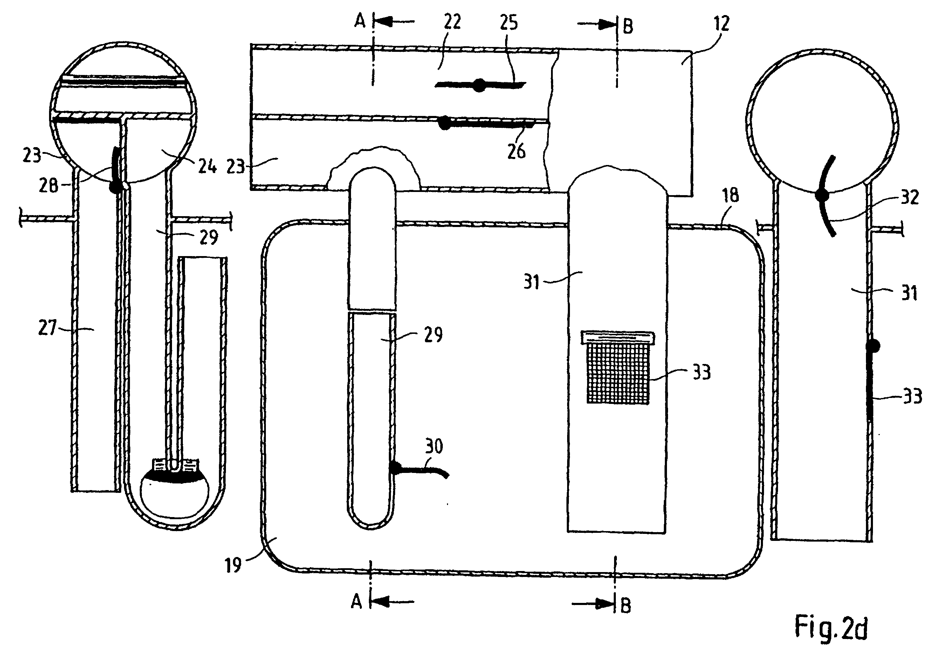

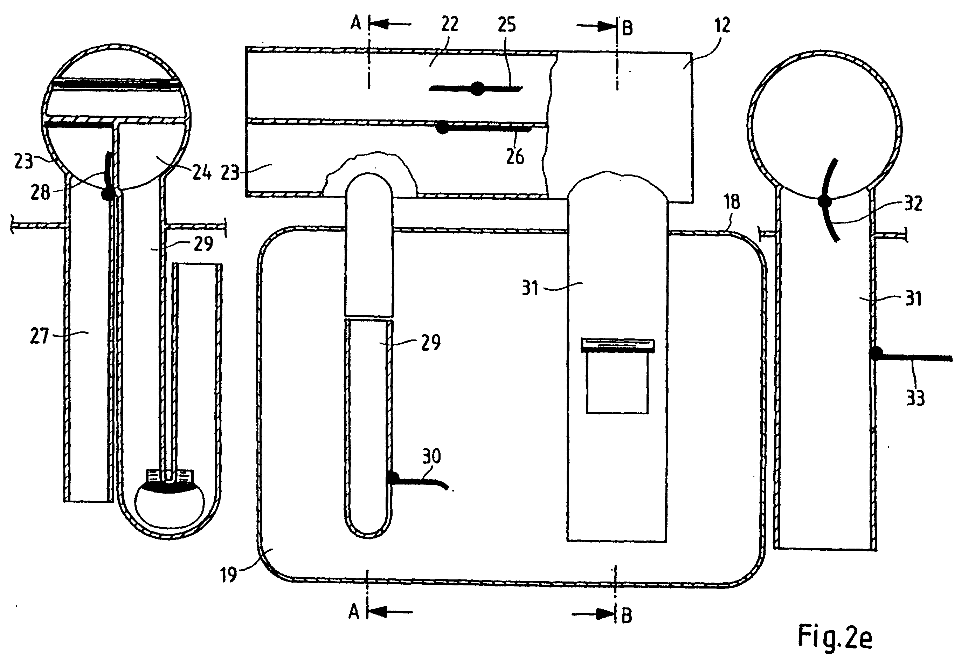

Figur 2 a-e mit ihren Systemdarstellungen zeigt den Aufbau eines Nebenschlußresonators, der trotz einer Tieftonabstimmung nur das Volumen 1.500 cm$^3$ benötigt. Figur 2 zeigt den mittleren Bereich, die Seitenansicht der Hauptstromleitung 12 und des Nebenschlußresonators 18, auf der linken Seite eine Schnittdarstellung entlang des Schnittes A, auf der rechten Seite eine Schnittdarstellung entlang des Schnittes B. In der segmentierten Hauptstromleitung 12 ist eine Drehklappe 25 vorgesehen, die den Kanalteil 22 verschließt sowie eine Schwenkklappe 26. Diese verschließt den Kanalteil 23. Der Kanalteil 24 ist - wie im Schnitt AA dargestellt - offen. Vom Kanalteil 23 führt ein Resonatorhals 27 in das Resonatorvolumen 19. Dieser Hals ist in der hier gezeigten Stellung jedoch mit einer Schwenkklappe 28 geschlossen. Ein weiterer Resonatorhals 29 steht mit dem Kanalteil 24 in Verbindung. Dieser Resonatorhals weist etwa die doppelte Länge des Resonatorhalses 27 auf. An seinem unteren Ende befindet sich eine Schwenkklappe 30, die eine Verkürzung bzw. eine Verlängerung des Resonatorhalses bewirkt. In der hier gezeigten Stellung ist dieser ebenfalls geschlossen.

Außerhalb des segmentierten Teiles der Hauptstromleitung 12 befindet sich ein weiterer Resonatorhals 31. Dieser steht mit der Hauptstromleitung 12 über eine Drehklappe 32 in Verbindung. Diese Drehklappe ist in der hier gezeigten Schaltstellung geschlossen. Eine weitere Schwenkklappe 33, die sich an dem Resonatorhals 31 befindet, ist ebenfalls geschlossen. Die hier gezeigte Schaltstellung eignet sich für Frequenzen im Bereich von 40 Hz, d. h. für den niederen Drehzahlbereich. Hierzu ist lediglich das Kanalteil 24 für die Zuführung der Reinluft zu der Brennkraftmaschine geöffnet. Gleichseitig ist dieses Kanalteil mit dem Resonatorhals 29 verbunden. Damit läßt sich eine extrem niedrige Abstimmfrequenz erreichen.

Figur 2 b zeigt eine Schaltstellung, bei der die Resonatorfrequenz des Nebenschlußresonators einen höheren Wert annimmt, passend zu einer höheren Drehzahl, die im Bereich von 60 Hz liegt. Gegenüber der Schaltstellung gemäß Figur 2a ist lediglich die Schwenkklappe 30 geöffnet. Damit wird der ursprünglich lange Hals verkürzt und, wie bereits erwähnt, die Resonatorfrequenz erhöht.

In Figur 2 c ist eine Schaltstellung erreicht, die eine Ansauggeräuschdämpfung bei ca. 80 Hz bewirkt. Neben der geöffneten Schwenkklappe 30 ist auch die Schwenkklappe 28 sowie die Schwenkklappe 26 geöffnet. Damit ist das Hauptstromrohr zur Hälfte geöffnet sowie die beiden Resonatorhalsteile 27 und 29. Diese beiden gleich langen Dünnrohre wirken wie ein Rohr mit doppeltem Flächenquerschnitt.

Figur 2 d zeigt neben den bereits geöffneten Klappen eine geöffnete Drehklappe 25, welche den oberen Querschnitt des segmentierten Teils des Hauptstromrohres freigibt. Ferner ist die Schwenkklappe 32 geöffnet und gibt damit den Resonatorhals 31 frei bzw. stellt hier eine Verbindung zu dem Volumen des Nebenschlußresonators her. in dieser Schaltstellung liegt die Resonanzfrequenz bei ca. 120 Hz.

Bei der in Figur 2 e gezeigten Schaltstellung liegt die Resonanzfrequenz bei 165 Hz. Dies entspricht einer Motordrehzahl von 5.300 U/min. eines 4-Zylinder 4-Takt-Motores. Sämtliche Schwenkklappen bzw. Drehklappen sind geöffnet, d. h. gegenüber den Schaltstellungen in Figur 2 d wurde lediglich noch die Drehklappe 33 geöffnet, die eine Verkürzung des Resonatorhalses 31 bewirkt.

Diese Beispielfolge macht deutlich, daß längs des Motordrehzahlbereiches eine Vielzahl von Löschungsfrequenzen eingestellt werden können, die zu den als störend ermittelten Einzeltönen passen. Auf diese Weise ist eine erfolgreiche Dämpfung nur mit einem festen Volumen sicher. Der Löschungserfolg ist umso größer, je näher man mit den Abzweigrohren an die Schaltwelle, d. h. an die einzelnen Zylinderköpfe der Brennkraftmaschine herankommt. Daher ist zu empfehlen, den Nebenschlußresonator auf die Reinluftseite des Filters zu legen, wie in Figur 1 dargestellt. Damit wird die Geräuschdämpfung auf hohem Energieniveau vollzogen und die nachfolgenden Bauteile werden weniger belastet. Das macht sich in einer verminderten Wandabstrahlung der beaufschlagten Bauteile bemerkbar.

In Figur 2 sind sechs einzelne Stellorgane gezeigt, die zur Umschaltung in fünf Frequenzstufen benötigt werden.

## Patentansprüche

1. Ansaugsystem für eine Brennkraftmaschine, bestehend aus einem Lufteinlaß, einem Luftfilter, einer Hauptstromleitung sowie vorzugsweise von der Hauptstromleitung ausgehende Einzelleitungen zu den Zylindern der Brennkraftmaschine, wobei ein Nebenschlußresonator vorgesehen ist, wobei ausgehend von der Hauptleitung (12) ein erster Hals (27) in dem Volumenbereich des Nebenstromresonators (18) erstreckt, wobei ein zweiter Hals (31) der ein mehrfaches des Querschnittes des ersten Halses (27) aufweist, sich ebenfalls in das Volumen (19) des Nebenschlußresonators (18) erstreckt und **dadurch gekennzeichnet, dass** der erste Hals (27) mit einer Schwenkklappe (28) gegenüber der Hauptstromleitung (12) verschließbar ist und der weitere Resonatorhals (31) mit der Hauptstromleitung (12) über eine Drehklappe (32) in Verbindung steht und wobei der weitere Resonatorhals (31) ebenfalls gegenüber der Hauptstromleitung (12) über die Drehklappe (32) verschließbar ist.

2. Ansaugsystem nach Anspruch 1, **dadurch gekennzeichnet, daß** das Resonatorvolumen (19) veränderlich ist.

3. Ansaugsystem nach Anspruch 1 oder 2, **dadurch gekennzeichnet, daß** die Veränderung in Abhängigkeit von der Drehzahl und/oder des Lastzustandes der Brennkraftmaschine erfolgt.

4. Ansaugsystem nach Anspruch 1, **dadurch gekennzeichnet, daß** die Hauptstromleitung (12) einen segmentierten Teil aufweist, wobei Segmente (22, 23) jeweils mit einer Verschlußklappe (25, 26) versehen sind.

5. Ansaugsystem nach einem der vorherigen Ansprüche, **dadurch gekennzeichnet, daß** zur Längen- undloder Querschnittsveränderung Stellklappen (30, 33) vorgesehen sind.

6. Ansaugsystem nach Anspruch 6, **dadurch gekennzeichnet, daß** sich ein weiterer Hals (29) einem dem ersten Hals (27) entsprechenden Querschnitt und doppelter Länge, in das Volumen (19) des Nebenschlußresonators (18) erstreckt.

## Claims

1. Intake system for an internal combustion engine, comprising an air inlet, an air filter, a main flow duct as well as individual ducts which preferably extend from the main flow duct to the cylinders of the internal combustion engine, a shunt resonator being provided, a first neck (27) extending from the main duct (12) in the range of volume of the shunt resonator (18), and a second neck (31), which has a multiple of the cross-section of the first neck (27), also extending into the volume (19) of the shunt resonator (18), **characterised in that** the first neck (27) is closable with a pivotal flap (28) relative to the main flow duct (12), the additional resonator neck (31) communicates with the main flow duct (12) via a rotary flap (32), and the additional resonator neck (31) is also closable relative to the main flow duct (12) via the rotary flap (32).

2. Intake system according to claim 1, **characterised in that** the resonator volume (19) is variable.

3. Intake system according to claim 1 or 2, **characterised in that** the change is effected in dependence on the rotational speed and/or the state of load of the internal combustion engine.

4. Intake system according to claim 1, **characterised in that** the main flow duct (12) has a segmented part, segments (22, 23) each being provided with a closure flap (25, 26).

5. Intake system according to one of the previous claims, **characterised in that** adjustment flaps (30, 33) are provided to change the length and/or cross-section.

6. Intake system according to claim 5, **characterised in that** an additional neck (29), having a cross-section corresponding to the first neck (27) and having twice the length of the latter, extends into the volume (19) of the shunt resonator (18).

**Revendications**

1. Système d'aspiration pour un moteur à combustion interne comprenant une entrée d'air, un filtre à air, une conduite principale ainsi que deux conduites séparées, partant de préférence de la conduite principale et rejoignant les cylindres du moteur, ainsi qu'un résonateur en dérivation, dans lequel :

   partant de la conduite principale (12), un premier col (27) s'étend dans le volume du résonateur en dérivation (18),
   un second col (31) ayant une section représentant un multiple du premier col (27) s'étend également dans le volume (19) du résonateur en dérivation (18),

   **caractérisé en ce que**
   le premier col (27) peut être fermé par rapport à la conduite principale (12) par un volet pivotant (28), et
   l'autre col de résonateur (31) est relié à la conduite principale (12) par un volet tournant (32), et
   l'autre col de résonateur (31) peut également être fermé vis-à-vis de la conduite principale (12) par le volet tournant (32).

2. Système d'aspiration selon la revendication 1,
   **caractérisé en ce que**
   le volume (19) du résonateur est variable.

3. Système d'aspiration selon les revendications 1 ou 2,
   **caractérisé en ce que**
   la variation se fait en fonction de la vitesse de rotation et/ou de l'état de charge du moteur à combustion interne.

4. Système d'aspiration selon la revendication 1,
   **caractérisé en ce que**
   la conduite principale (12) comporte une partie segmentée et les segments (22, 23) sont munis chacun d'un volet de fermeture (25, 26).

5. Système d'aspiration selon l'une des revendications précédentes,
   **caractérisé par**
   des volets de réglage (30, 33) pour modifier la longueur et/ou la section.

6. Système d'aspiration selon la revendication 5,
   **caractérisé par**
   un autre col (29) avec une section correspondant à celle du premier col (27) et de longueur double qui s'étend également dans le volume (19) du résonateur en dérivation (18).

Fig.1

Fig.2a

EP 1 012 458 B1

Fig.2b

Fig.2c

Fig.2d

Fig.2e

EP 1 012 458 B1